# EUROPÄISCHE PATENTSCHRIFT

(11) **EP 0 477 416 B1**
(45) Veröffentlichungstag und Bekanntmachung des Hinweises auf die Patenterteilung: **19.04.1995**
(21) Anmeldenummer: 90118650.2
(22) Anmeldetag: 28.09.1990
(51) Int. Cl.: G02B 6/44

(54) **Optisches Kabel**
Optical cable
Câble optique

(43) Veröffentlichungstag der Anmeldung: 01.04.1992
(73) Patentinhaber: KABEL RHEYDT Aktiengesellschaft, D-41179 Mönchengladbach (DE)
(72) Erfinder: Zamzow, Peter, W-4630 Bochum 1 (DE); Gregor, Paul, W-4200 Oberhausen 11 (DE); Delage, Peter, W-4053 Jüchen 5 (DE)
(74) Vertreter: Mende, Eberhard, Dipl.-Ing.

(56) Entgegenhaltungen:
- EP-A- 0 084 388
- DE-A- 3 923 543
- GB-A- 2 161 618
- 6TH EUROPEAN CONFERENCE ON OPTICAL COMMUNICATION, University of York, 19. September 1980, PROCEEDINGS, Seiten 372-375 ; W. SCHMIDT et al. : "320-core optical fibre cable"

## Beschreibung

Die Erfindung betrifft ein optisches Kabel nach dem Oberbegriff des Anspruches 1. Im allgemeinen sind optische Kabel aus optischen Adern aufgebaut, welche zu Bündeln zusammengefaßt sind. Bei einer normalen Bündelkonstruktion ist jedoch die Packungsdichte nicht hoch genug und ihre Orientierung in der Bündelader nicht definiert. Beispielsweise ist ein Lichtwellenleiterkabel bekannt (GB 21 61 618 A), bei dem eine Vielzahl optischer Fasern enthaltende Bündel um ein Trägerelement verseilt ist und diese Seele anschließend ummantelt wird. Ein ähnliches Kabel ist aus :
Sixth European Conference on Optical Communication, 1980, S. 372 - 375 bekannt.

Der Erfindung liegt daher die Aufgabe zugrunde, ein optisches Kabel anzugeben, welches eine systematische Zuordnung der Lichtwellenleiter aufgrund ihrer geometrischen Anordnung gestattet, und bei dem innerhalb eines vorgegebenen Durchmessers möglichst viele Lichtwellenleiter im Kabel vorhanden sind. Diese Aufgabe wird bei einem optischen Kabel der eingangs erwähnten Art nach der Erfindung durch die im Kennzeichen aufgeführten Merkmale gelöst. Vorteilhafte Ausgestaltungen der Erfindung sind in den Unteransprüchen beschrieben.

Für eine kompakte und raumsparende Kabelkonstruktion ist es von Vorteil, wenn Lichtwellenleiterfasern direkt auf ein Zugentlastungselement aufgebracht werden. Dies ist beispielsweise der Fall bei einem Bändchenkabel, bei dem die Fasern auf ein zugfestes Band geklebt sind. Für eine Kabelkonstruktion ist jedoch eine kreisförmige Anordnung von Lichtwellenleiterfasern günstiger, da sie in sich stabiler ist und besser verseilt werden kann. Um Platz zu sparen, wurde ein optische Ader geschaffen, bei der die optischen Fasern nicht innerhalb einer zugfesten Hülle, sondern um ein zugfestes Trägerelement herum angeordnet sind. Die Fixierung auf dem Trägerelement erfolgt mittels eines elastischen Klebers, so daß beim Biegen des Trägerelementes keine unzulässig hohen Zugspannungen auf die Lichtwellenleiterfasern übertragen werden.

Als Anwendungsgebiet der Erfindung ist das Ortsnetz der Post vorgesehen. Das optische Kabel nach der Erfindung ist wesentlich kompakter und auch einfacher herzustellen als die üblichen Kabel, bei denen die LWL-Fasern lose in einer Hülle angeordnet sind.

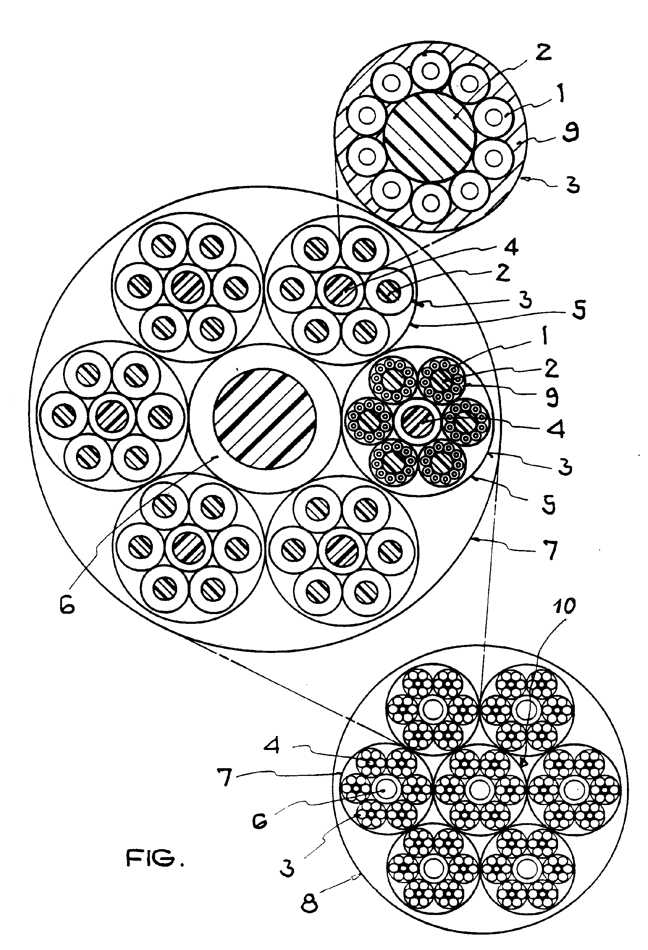

Ein bevorzugtes Ausführungsbeispiel der Erfindung wird nachstehend anhand der Zeichnung näher erläutert. Die Figur zeigt im oberen Teil eine Explosionsdarstellung eines Hauptbündels 7 aus dem unteren Teil der Figur, welcher die vollständige Seele 8 darstellt. Das Hauptbündel 7 enthält ebenfalls in der günstigen Anordnung von sechs Untereinheiten die Grundbündel 5. Diese Grundbündel sind um einen Kern 6 herum verseilt.

In einer vorteilhaften Ausgestaltung der Erfindung wird als Grundlage der Konstruktion des optischen Kabels ein optisches Element aus zehn optischen Glasfasern 1 mit einem Trägerelement 2 vorgesehen. Die zehn optischen Fasern sind um dieses Trägerelement kreisförmig angeordnet und werden parallel laufend mittels SZ-Verseilung aufgebracht. Zur Unterscheidung können die einzelnen Fasern farblich signiert sein, es besteht hier auch die Möglichkeit, eine Zähl- und Richtungsfaser vorzugeben. Die Fixierung der Fasern um das Trägerelement erfolgt z.B. mittels eines Heißschmelzklebers auf der Basis von Polyamid. Der Kleber ist mechanisch leicht von den Fasern zu entfernen. Außerdem hat er die Eigenschaft, elastisch nachzugeben, wenn das optische Element 3 mechanisch beansprucht wird. Der Durchmesser dieser optischen Ader beträgt 1,1 mm bei einer Faserzahl von 10 LWL.

Der Stauchschutz wird durch einen GFK-Stab (GFK=glasfaserverstärkter Kunststoff) von 0,55 mm Durchmesser bei 10 LWL gegeben, aus den Adern 3 wird das Grundbündel 5 dadurch aufgebaut, daß sechs Adern um ein Polsterelement 4 verseilt sind. Die Verseilung geschieht vorzugsweise nach dem SZ-Verfahren. Es ist möglich, in dem Grundbündel 60 optische Fasern unterzubringen, bei einem Außendurchmesser von 3,5 mm.

Die Fixierung der Adern im Grundbündel 5 kann durch eine Wendel erfolgen bzw durch Adhäsionskleber, welcher nach Benetzung des Polsterelements 4 die Ader nach der Verseilung fixiert. Als Material für das Polsterelement 4 wird ein "Low Density Polyethylene" (LDPE) mit einem Durchmesser von 1,1 mm verwendet.

Das Hauptbündel 7 enthält so beispielsweise 360 optische Fasern und besitzt einen Durchmesser von 11 mm. Seine Herstellung erfolgt grundsätzlich wie bei den Grundbündeln durch Verseilung der Bündel um ein zentrales Element oder Kern 6. Dieser Kern ist ebenfalls ein GFK-Stauchschutzelement, welches mit einer Polsterschicht aus LDPE umgeben ist. Sechs dieser Hauptbündel werden als zentrales Element 10 herum zur Kabelseele verseilt. Dieses zentrale Element 10 ist vorzugsweise ein Hauptbündel. In einer weiteren bevorzugten Ausführung besteht dieses zentrale Element aus einem aufgedickten GFK-Stab von 11 mm Durchmesser. Die Seele hat einen Durchmesser von 33 mm und enthält 2.160 LWL-Fasern.

In der Konstruktion ist vorgesehen, daß das Trägerelement 2 der optischen Fasern 1 sowie der im Polsterelement 4 des Grundbündels befindliche Kern aus einem GFK-Stab von 0,55 mm Durchmesser bestehen, um hier die entsprechende Zug- und Stauchfestigkeit zu erzielen. Der Kern 6 des Hauptbündels sowie der Kern der Seele sind auf Nenndurchmesser aufgedickte GFK-Stäbe von 2,3 mm Durchmesser.

Aufgrund des eingebrachten GFK-Materials in die Kabelseele wird ein GFK-Gesamtquerschnitt von 89 mm² erzielt. Hiermit wird eine Zugfestigkeit der Seele von ca. 20 kN bei 0,5 % Dehnung erreicht. Aufgrund der hohen Festigkeit der Seele 8 kann auf eine zugfeste Mantelkonstruktion verzichtet werden. Im allgemeinen wird nach Füllung der Kabelseele zur Herstellung der Längswasserdichtigkeit und Bebänderung ein Polyäthylenmantel aufextrudiert.

## Patentansprüche

1. Optisches Kabel bestehend aus Grundbündeln (5), welche Adern (3) bestehend aus um ein Träger element (2) verseilten optischen Fasern (1) enthalten, wobei jeweils Grundbündel (5) um einen Kern (6) zu einem Hauptbündel (7) verseilt sind, dadurch gekennzeichnet, daß mehrere Hauptbündel (7) ihrerseits um ein zentrales Element (10) herum zu einer Kabelseele (8) verseilt sind und daß jedes Grundbündel (5) aus jeweils sechs Adern (3), die um ein Polsterelement (4) herum geseilt sind, besteht.

2. Optisches Kabel nach Anspruch 1, dadurch gekennzeichnet, daß die optischen Adern (3) acht bis zehn um ein Trägerelement (2) angeordnete optische Fasern (1) aufweisen.

3. Optisches Kabel nach Anspruch 2, dadurch gekennzeichnet, daß die optischen Fasern (1) um das Trägerelement (2) im SZ-Verfahren verseilt sind.

4. Optisches Kabel nach Anspruch 2, dadurch gekennzeichnet, daß die optischen Fasern (1) um das Trägerelement (2) gleichsinning verseilt sind.

5. Optisches Kabel nach Anspruch 3 oder 4, dadurch gekennzeichnet, daß die Schlaglänge der Verseilung der optischen Fasern (1) etwa 30 cm beträgt.

6. Optisches Kabel nach Anspruch 3 oder einem der folgenden, dadurch gekennzeichnet, daß die optischen Fasern (1) durch einen elastischen Kleber (9) mit dem Trägerelement (2) verbunden sind.

7. Optisches Kabel nach Anspruch 1 oder einem der folgenden, dadurch gekennzeichnet, daß das Kabel mit einem Gel gefüllt ist, welches die Zwischenräume in der Kabelseele (8) ausfüllt.

8. Optisches Kabel nach Anspruch 1 oder einem der folgenden, dadurch gekennzeichnet, daß die Kabelseele (8) bebändert ist und ein Kabelmantel aufgebracht ist.

## Claims

1. Optical cable consisting of basic bundles (5) which contain strands (3) consisting of optical fibres (1) twisted around a carrier element (2), each respective basic bundle (5) being twisted around a core (6) to form a main bundle (7), characterized in that a plurality of main bundles (7) for their part are twisted around a central element (10) to form a cable core (8) and in that each basic bundle (5) consists respectively of six strands (3) which are twisted around a cushioning element (4).

2. Optical cable according to Claim 1, characterized in that the optical strands (3) have eight to ten optical fibres (1) arranged around a carrier element (2).

3. Optical cable according to Claim 2, characterized in that the optical fibres (1) are twisted around the carrier element (2) in the SZ-process.

4. Optical cable according to Claim 2, characterized in that the optical fibres (1) are twisted around the carrier element (2) in the same direction.

5. Optical cable according to Claim 3 or 4, characterized in that the pitch length of the twisting of the optical fibres (1) is approximately 30 cm.

6. Optical cable according to Claim 3 or one of the following, characterized in that the optical fibres (1) are connected to the carrier element (2) by means of an elastic adhesive (9).

7. Optical cable according to Claim 1 or one of the following, characterized in that the cable is filled with a gel which fills up the interspaces in the cable core (8).

8. Optical cable according to Claim 1 or one of the following, characterized in that the cable core (8) is strapped and a cable sheath is applied.

## Revendications

1. Câble optique composé de faisceaux de base (5) qui contiennent des conducteurs composés de fibres optiques (1) toronnées autour d'un élément porteur (2), les faisceaux de base (5) étant à chaque fois toronnés autour d'un noyau (6) pour former un faisceau principal (7), caractérisé en ce que plusieurs faisceaux principaux (7) sont de leur côté toronnés autour d'un élément central (10) pour former une âme de câble (8) et en ce que chaque faisceau de base (5) se compose à chaque fois de six conducteurs (3) qui sont toronnés autour d'un élément de capitonnage (4).

2. Câble optique selon la revendication 1, caractérisé en ce que les conducteurs optiques (3) présentent huit à dix fibres optiques (1) disposées autour d'un élément porteur (2).

3. Câble optique selon la revendication 2, caractérisé en ce que les fibres optiques (1) sont toronnées autour de l'élément porteur (2) dans le procédé SZ.

4. Câble optique selon la revendication 2, caractérisé en ce que les fibres optiques (1) sont toronnées dans le même sens autour de l'élément porteur (2).

5. Câble optique selon la revendication 3 ou 4, caractérisé en ce que le pas du toronnage des fibres optiques (1) est égal à environ 30 cm.

6. Câble optique selon la revendication 3 ou une des revendications suivantes, caractérisé en ce que les fibres optiques (1) sont reliées à l'élément porteur (2) au moyen d'un adhésif élastique (9).

7. Câble optique selon la revendication 1 ou une des revendications suivantes, caractérisé en ce que le câble est rempli d'un gel qui comble les espaces intermédiaires dans l'âme de câble (8).

8. Câble optique selon la revendication 1 ou une des revendications suivantes, caractérisé en ce que l'âme de câble (8) est rubanée et en ce qu'une gaine de câble est mise en place.
